# EUROPEAN PATENT SPECIFICATION

(11) **EP 3 799 719 B1**
(45) Date of publication and mention of the grant of the patent: **07.06.2023**
(21) Application number: 19201532.9
(22) Date of filing: 04.10.2019
(51) Int. Cl.: A22B 5/00, A22C 21/00

(54) **TREATMENT OF AN ANIMAL CARCASS AFTER SLAUGHTERING**
BEHANDLUNG EINES TIERKADAVERS NACH DER SCHLACHTUNG
TRAITEMENT DE LA CARCASSE D'UN ANIMAL APRÈS L'ABATTAGE

(43) Date of publication of application: 07.04.2021
(73) Proprietor: L'Air Liquide, Société Anonyme pour l'Etude et l'Exploitation des Procédés Georges Claude, 75007 Paris (FR); Air Liquide Deutschland GmbH, 40235 Düsseldorf (DE)
(72) Inventor: Rinklake, Ansgar, 49196 Bad Laer (DE)
(74) Representative: Keenway Patentanwälte Neumann Heine Taruttis

(56) References cited:
- EP-A2- 0 827 695
- WO-A1-2017/080849

## Description

The present invention is directed to a method for treating an animal carcass after slaughtering, in particular for disinfecting a poultry carcass. Thereby, in particular, campylobacter bacteria can be killed.

It is known that animal carcasses, in particular poultry carcasses, can be contaminated with campylobacter bacteria after slaughtering. These bacteria can cause illness if a human eats a food product obtained from a contaminated carcass. Therefore, methods have been developed to treat carcasses after slaughtering in order to reduce the amount of campylobacter bacteria on the carcass surface. These methods, however, are often inefficient. That is, a great effort is required for a small reduction of bacteria.

A method for processing an animal carcass into food is known from EP 0 827 695 A2. Therein, the carcass is treated with a cold gas mixture including ozone.

It is, therefore, an object of the present invention to overcome at least in part the disadvantages known from prior art and, in particular, to provide a method for treating an animal carcass after slaughtering, by means of which the animal carcass can be disinfected particularly efficiently, in particular with respect to campylobacter bacteria.

These objects are solved by the features of the independent claim. Dependent claims are directed to preferred embodiments of the present invention.

According to the invention a method is provided for treating an animal carcass after slaughtering. The method comprises:
a) placing the carcass into a chamber, and
b) disinfecting the carcass within the chamber by maintaining an oxygen concentration within the chamber above 25 % and maintaining a temperature of the carcass above 10 °C.

All concentrations given herein refer to the volume fraction. That is, concentrations are given in volume percent.

With the described method an animal carcass can be treated. An animal carcass is the body of a dead animal. The method can be performed after slaughtering. The treatment comprises disinfecting the carcass. Thus, the described method can be considered a method for disinfecting the carcass. However, the described method can comprise further treatment of the carcass such that the method is described as a method for treating the carcass.

The disinfecting of the carcass is performed within a chamber. The animal is slaughtered outside the chamber. In step a), the carcass is placed into the chamber. That is, the animal is already dead when being placed into the chamber. The chamber is preferably sealed such that the atmosphere within the chamber can be controlled. Preferably, the chamber comprises a door, via which the carcass can be placed into the chamber and via which the carcass can be taken out of the chamber. The door is preferably configured so as to seal the chamber when the door is closed. The chamber is preferably made of steel. This material is particularly hygienic.

In step b) the carcass is disinfected. Thereby, bacteria can be killed, in particular campylobacter bacteria. This is possible because it was found that bacteria such as the campylobacter bacteria can be killed by maintaining an oxygen concentration within the chamber above 25 volume % and by maintaining a temperature of the carcass above 10 °C. The combination of this oxygen concentration and this temperature was found to kill campylobacter bacteria.

During step b) the oxygen concentration in the chamber is maintained within 25 and 100 %. During step b) the temperature of the carcass is preferably maintained within 10 °C and 120 °C, in particular between 10 °C and 50 °C. A temperature above 50 °C could already affect the carcass in a manner only desired in cooking.

Usually, carcasses are cooled immediately after slaughtering. Thereby, molding of the carcasses can be prevented. According to the invention, however, the temperature of the carcass is maintained at least above 10 °C for disinfecting. It was found that the reduction of campylobacter bacteria justifies the delayed cooling because the reduction of the campylobacter bacteria increases the food quality, while a comparatively short delay in cooling does not have any significant negative effect.

According to a preferred embodiment of the method step a) is performed less than 30 minutes after slaughtering.

Preferably, step a) is performed less than 10 minutes, in particular less than 1 minute after slaughtering. Preferably, step a) is performed between 1 and 5 minutes after slaughtering. "Slaughtering" refers to the time of death of the animal.

In the present embodiment step a) is performed immediately after slaughtering. "Immediately after slaughtering" means that the carcass is placed into the chamber less than 30 minutes, in particular less than 10 minutes, in particular less than 1 minute after the time of death. Between the slaughtering and step a), feathers can be removed from the carcass, the carcass can be cut open and/or pluck can be removed from the carcass. Preferably, step a) is performed after pluck has been removed from the carcass and before any other process step is performed. Immediately after slaughtering, the carcass is still warm due to the body heat of the animal. If the described method is performed sufficiently soon after slaughtering, the temperature of the carcass is sufficient for the disinfection according to step b) without requiring a heating of the carcass. Also, the campylobacter bacteria are preferably killed as soon as possible in order to prevent them from spreading out. Further, food quality could be reduced if the carcass was cooled after slaughtering and heated up again for disinfecting. Heating up the carcass after cooling it down would interrupt the cold chain, which is supposed to be avoided with food products. Such a cooling down and heating up would also be energetically inefficient. Nevertheless, also according to the described method the carcass is preferably cooled as soon as possible. Therefore, the embodiment is preferred, in which the method further comprises:
c) cooling the carcass.

Step c) is performed after step b). That is, after slaughtering an animal its carcass is preferably disinfected as soon as possible and, subsequently, cooled down as soon as possible. Preferably, the carcass is cooled as soon as the carcass is removed from the chamber after disinfecting.

According to the invention, during step b) the oxygen concentration within the chamber is maintained above 25 %.

The oxygen concentration is maintained above the oxygen concentration in air. This can be achieved by accumulating oxygen within the chamber and/or by introducing oxygen into the chamber, in particular pure oxygen. That is, the oxygen concentration within the chamber is deliberately increased compared to air. This is reasonable because it was found that bacteria such as campylobacter bacteria can be killed by oxygen provided the temperature is sufficiently high. A higher oxygen concentration enhances this effect. The oxygen concentration within the chamber is maintained between 25 % and 100 %, in particular between 40 % and 60 %. An oxygen concentration above 60 % can be dangerous because oxygen contribute to starting a fire.

According to a further preferred embodiment of the method, during step b) the temperature of the carcass is maintained above 30 °C.

It was found that bacteria such as the campylobacter bacteria can be killed by oxygen the more efficiently, the higher the temperature is. Thus, in the present embodiment the temperature of the carcass is maintained above 30 °C. This temperature is close to the body temperature of animals such that this temperature can be maintained during step b) without heating the carcass. Nevertheless, it is preferred that during step b) the temperature of the carcass is maintained between 30 °C and 120 °C, in particular between 30 °C and 50 °C.

This can be achieved, in particular, according to the further preferred embodiment of the method, wherein in step b) the carcass is heated.

The carcass can be heated during a part of step b) or during the entire step b). The carcass can be heated, for example, by heating a gas within the chamber and/or by irradiating and/or contacting the carcass. The carcass is preferably heated to a temperature between 40 °C and 80 °C, in particular between 30 °C and 50 °C.

According to a further preferred embodiment of the method step b) lasts at least 1 minute.

Preferably, step b) lasts at least 15 minutes, in particular at least 1 hour. Such a duration of the disinfecting can be sufficient in order to achieve a certain desired food quality. However, it is also possible to adapt the duration of step b) to working routines. Therefore, it is preferred that step b) lasts at least 4 hours, in particular at least 8 hours. This time may correspond to (half) the duration of a working shift. Performing step b) over several hours has the advantage that it is almost certain that all bacteria are killed.

Preferably, step b) lasts between 1 minute and 1 hour, in particular between 5 and 15 minutes. Alternatively, it is preferred that step b) lasts between 3 and 5 hours, which may correspond to half a working shift, or between 7 and 9 hours, which may correspond to a full working shift.

Preferably, step b) is performed until substantially all bacteria are killed, in particular substantially all campylobacter bacteria. "Substantially all" refers to how many bacteria are allowed to remain in and/or on the carcass if the carcass is supposed to be used as a food product. For example, step b) can be performed until 99.99 % of the bacteria, in particular 99.99 % of the campylobacter bacteria, are removed from the carcass.

It was found that the present embodiment is a reasonable compromise between a sufficient reduction of bacteria and a sufficiently fast processing. A slow processing is disadvantageous not only in view of the duration of the method, but also in view of delaying the cooling.

According to a further preferred embodiment of the method, during step b) a pressure within the chamber is maintained between 0.2 and 800 mbar.

In this embodiment the pressure within the chamber is maintained below atmospheric pressure. Thereby, a gas within the chamber can be confined to the chamber particularly well. This can prevent substances such as bacteria from leaving the chamber. Also, sealing the chamber can increase safety, in particular if a gas within the chamber comprises a particularly high oxygen concentration. A gas having a high oxygen concentration can be inflammable.

Alternatively, according to a further preferred embodiment of the method, during step b) a pressure within the chamber is maintained between 1.2 and 10 bar.

In this embodiment the pressure within the chamber is higher than atmospheric pressure. This is possible if the chamber is sufficiently tight such that the before described issues are avoided. This may require a more complicated construction of the chamber. However, it was found that bacteria such as campylobacter bacteria can be killed particularly well at a higher pressure within the chamber.

According to a further preferred embodiment of the method, in step b) the carcass is subjected to a jet of a gas comprising oxygen.

It was found that bacteria, in particular campylobacter bacteria, can be killed by oxygen provided the temperature is sufficiently high. By subjecting the carcass to a jet of pure oxygen or a jet of a mixture comprising oxygen, particularly high oxygen concentrations can be achieved locally at the surface of the carcass. Therefore, the bacteria can be killed particularly efficiently.

According to a further preferred embodiment of the method the animal is poultry.

Campylobacter bacteria are an issue with different animals. However, these bacteria are found in and/or on poultry carcasses particularly often.

According to a further preferred embodiment of the method steps a) and b) are performed as a continuous process.

In a continuous process, one carcass after the other is treated according to steps a) and b). This can be achieved, for example, by conveying the carcasses through the chamber by a conveyor. Via air locks, the carcasses can be introduced into and taken out of the chamber. A continuous process is particularly fast, but requires a respective equipment. Also, in this embodiment it is particularly difficult to confine gas to the chamber because the carcasses must be introduced into and taken out of the chamber while the chamber is in operation.

Alternatively, according to a further preferred embodiment of the method steps a) and b) are performed as a batch process.

In a batch process, a first batch of one or more carcasses is placed into the chamber and treated according to step b). Subsequently, another batch of one or more carcasses is treated that way. In this embodiment the chamber can be sealed by closing a door. Thus, it is particularly easy to confine gas to the chamber. Also, no conveyor and/or airlocks are required such that the equipment is particularly simple. However, a batch process might be slower than a continuous process.

According to a further aspect a use of oxygen for treating an animal carcass after slaughtering is presented. The use comprises:
A) placing the carcass into a chamber, and
B) disinfecting the carcass within the chamber by introducing the oxygen into the chamber so as to maintain an oxygen concentration within the chamber above 25 %, and by maintaining a temperature of the carcass above 10 °C.

The details and advantages disclosed for the described method can be applied to the described use, and vice versa.

The oxygen is used to maintain an oxygen concentration within the chamber that is higher than the oxygen concentration in air.

It should be noted that the individual features specified in the claims may be combined with one another in any desired technologically reasonable manner and form further embodiments of the invention. The specification, in particular taken together with the figures, explains the invention further and specifies particularly preferred embodiments of the invention. Particularly preferred variants of the invention and the technical field will now be explained in more detail with reference to the enclosed figures. It should be noted that the exemplary embodiments shown in the figures are not intended to restrict the invention. The figures are schematic and may not be to scale. The figures display:
- Fig. 1:: a flow diagram of a method according to the invention for treating an animal carcass after slaughtering,
- Fig. 2:: a flow diagram of a use according to the invention for treating an animal carcass after slaughtering, and
- Fig. 3:: a sectional side view of a device for treating an animal carcass after slaughtering, in particular according to the method of Fig. 1 and/or according to the use of Fig. 2.

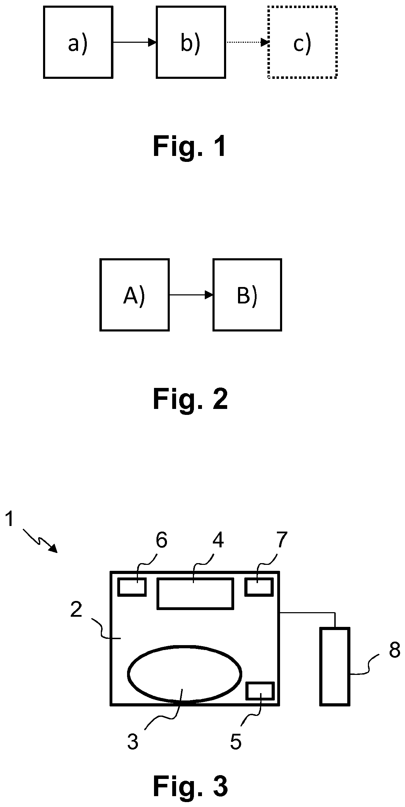

Fig. 1 is a flow diagram of a method for treating an animal carcass 3, in particular a poultry carcass, after slaughtering. The method is described using the reference numerals of Fig. 3. The method comprises:
a) less than 30 minutes, preferably less than 10 min, in particular less than 1 minute after slaughtering placing the carcass 3 into a chamber 2, and
b) disinfecting the carcass 3 within the chamber 2 for at least 1 minute, preferably for at least 15 minutes, in particular for at least 1 hour, by maintaining an oxygen concentration within the chamber 2 above 25 %, maintaining a temperature of the carcass 3 above 10 °C, in particular above 30 °C, and, in particular, by maintaining a pressure within the chamber 2 between 0.2 and 800 mbar or between 1.2 and 10 bar and/or by heating the carcass 3 and/or by subjecting the carcass 3 to a jet of a gas comprising oxygen.

Steps a) and b) can be performed as a continuous process or as a batch process.

Preferably, the method further comprises the following step,
c) cooling the carcass 3,
which is indicated by a dotted box in Fig. 1.

Fig. 2 is a flow diagram of a use of oxygen for treating an animal carcass 3, in particular a poultry carcass, after slaughtering. The use is described using the reference numerals of Fig. 3. The use comprises:
A) placing the carcass 3 into a chamber 2, and
B) disinfecting the carcass 3 within the chamber 2 by introducing the oxygen into the chamber 2 so as to maintain an oxygen concentration within the chamber 2 above 25 %, and by maintaining a temperature of the carcass 3 above 10 °C.

Fig. 3 is a sectional side view of a device 1 for treating an animal carcass 3 after slaughtering, in particular according to the method of Fig. 1 and/or according to the use of Fig. 2. The device 1 comprises a chamber 2, in which the carcass 3 can be treated, in particular disinfected. Within the chamber 2, the carcass 3 is subjected to an atmosphere with an oxygen concentration above 25 %. In order to monitor the oxygen concentration, an oxygen sensor 6 is arranged within the chamber 2. The oxygen sensor 6 is configured for measuring the oxygen concentration. If the oxygen concentration is lower than a set value, oxygen from an oxygen tank 8 can be introduced into the chamber 2.

Further, a temperature sensor 5 is arranged within the chamber 2. The temperature sensor 5 is configured for measuring the temperature of the carcass 3. This temperature can be approximated by measuring the temperature in the proximity of the carcass 3. Alternatively, the temperature sensor 5 can be configured as an infrared sensor for measuring the surface temperature of the carcass 3. In particular in case the temperature falls below a set value, the carcass 3 can be heated by a heater 4.

The pressure within the chamber 2 can be monitored by means of a pressure sensor 7 arranged within the chamber 2. If the pressure deviates from a set value, a gas can be introduced into the chamber 2 or extracted from the chamber 2. The gas can be, for example, oxygen.

With the described method and use an animal carcass 3 can be disinfected particularly efficiently, in particular with respect to campylobacter bacteria. Therefore, the carcass 3 is subjected to an oxygen concentration above 25 % and to a temperature above 10 °C.

### List of reference numerals

- 1: device
- 2: chamber
- 3: carcass
- 4: heater
- 5: temperature sensor
- 6: oxygen sensor
- 7: pressure sensor
- 8: oxygen tank

## Claims

1. Method for treating an animal carcass (3) after slaughtering, comprising:
a) placing the carcass (3) into a chamber (2), and
b) disinfecting the carcass (3) within the chamber (2) by maintaining an oxygen concentration within the chamber (2) above 25 volume percent and maintaining a temperature of the carcass (3) above 10 °C.

2. Method according to claim 1, wherein step a) is performed less than 30 minutes after slaughtering.

3. Method according to any of the preceding claims, further comprising:
c) cooling the carcass (3).

4. Method according to any of the preceding claims, wherein during step b) the temperature of the carcass (3) is maintained above 30 °C.

5. Method according to any of the preceding claims, wherein in step b) the carcass (3) is heated.

6. Method according to any of the preceding claims, wherein step b) lasts at least 1 minute.

7. Method according to any of the preceding claims, wherein during step b) a pressure within the chamber (2) is maintained between 0.2 and 800 mbar.

8. Method according to any one of claims 1 to 6, wherein during step b) a pressure within the chamber (2) is maintained between 1.2 and 10 bar.

9. Method according to any of the preceding claims, wherein in step b) the carcass (3) is subjected to a jet of a gas comprising oxygen.

10. Method according to any of the preceding claims, wherein the animal is poultry.

11. Method according to any of the preceding claims, wherein steps a) and b) are performed as a continuous process.

12. Method according to any one of claims 1 to 10, wherein steps a) and b) are performed as a batch process.

## Patentansprüche

1. Verfahren zum Behandeln eines Tierkadavers (3) nach einem Schlachten, umfassend:
a) Platzieren des Tierkadavers (3) in einer Kammer (2) und
b) Desinfizieren des Tierkadavers (3) innerhalb der Kammer (2) durch Halten einer Sauerstoffkonzentration innerhalb der Kammer (2) bei über 25 Volumenprozent und Halten einer Temperatur des Tierkadavers (3) bei über 10 °C.

2. Verfahren nach Anspruch 1, wobei Schritt a) weniger als 30 Minuten nach dem Schlachten durchgeführt wird.

3. Verfahren nach einem der vorstehenden Ansprüche, ferner umfassend:
c) Kühlen des Tierkadavers (3).

4. Verfahren nach einem der vorstehenden Ansprüche, wobei während Schritt b) die Temperatur des Tierkadavers (3) bei über 30 °C gehalten wird.

5. Verfahren nach einem der vorstehenden Ansprüche, wobei in Schritt b) der Tierkadaver (3) erwärmt wird.

6. Verfahren nach einem der vorstehenden Ansprüche, wobei Schritt b) mindestens 1 Minute dauert.

7. Verfahren nach einem der vorstehenden Ansprüche, wobei während Schritt b) ein Druck zwischen 0,2 und 800 mbar innerhalb der Kammer (2) gehalten wird.

8. Verfahren nach einem der Ansprüche 1 bis 6, wobei während Schritt b) ein Druck zwischen 1,2 und 10 bar innerhalb der Kammer (2) gehalten wird.

9. Verfahren nach einem der vorstehenden Ansprüche, wobei in Schritt b) der Tierkadaver (3) mit einem Strahl eines Gases beaufschlagt wird, umfassend Sauerstoff.

10. Verfahren nach einem der vorstehenden Ansprüche, wobei das Tier Geflügel ist.

11. Verfahren nach einem der vorstehenden Ansprüche, wobei die Schritte a) und b) als ein kontinuierlicher Prozess durchgeführt werden.

12. Verfahren nach einem der Ansprüche 1 bis 10, wobei die Schritte a) und b) als ein Batch-Prozess durchgeführt werden.

## Revendications

1. Procédé de traitement d'une carcasse (3) d'animal après abattage, comprenant :
a) le placement de la carcasse (3) dans une chambre (2), et
b) la désinfection de la carcasse (3) à l'intérieur de la chambre (2) en maintenant une concentration d'oxygène à l'intérieur de la chambre (2) supérieure à 25 pour cent en volume et en maintenant une température de la carcasse (3) supérieure à 10 °C.

2. Procédé selon la revendication 1, dans lequel l'étape a) est réalisée moins de 30 minutes après l'abattage.

3. Procédé selon l'une quelconque des revendications précédentes, comprenant en outre :
c) le refroidissement de la carcasse (3).

4. Procédé selon l'une quelconque des revendications précédentes, dans lequel, pendant l'étape b), la température de la carcasse (3) est maintenue au-dessus de 30 °C.

5. Procédé selon l'une quelconque des revendications précédentes, dans lequel, dans l'étape b), la carcasse (3) est chauffée.

6. Procédé selon l'une quelconque des revendications précédentes, dans lequel l'étape b) dure au moins 1 minute.

7. Procédé selon l'une quelconque des revendications précédentes, dans lequel, pendant l'étape b), une pression à l'intérieur de la chambre (2) est maintenue entre 0,2 et 800 mbar.

8. Procédé selon l'une quelconque des revendications 1 à 6, dans lequel, pendant l'étape b), une pression à l'intérieur de la chambre (2) est maintenue entre 1,2 et 10 bars.

9. Procédé selon l'une quelconque des revendications précédentes, dans lequel, dans l'étape b), la carcasse (3) est soumise à un jet d'un gaz comprenant de l'oxygène.

10. Procédé selon l'une quelconque des revendications précédentes, dans lequel l'animal est de la volaille.

11. Procédé selon l'une quelconque des revendications précédentes, dans lequel les étapes a) et b) sont réalisées en tant que procédé continu.

12. Procédé selon l'une quelconque des revendications 1 à 10, dans lequel les étapes a) et b) sont réalisées en tant que traitement par lots.
